# EUROPEAN PATENT SPECIFICATION

(11) **EP 3 437 914 B1**
(45) Date of publication and mention of the grant of the patent: **24.11.2021**
(21) Application number: 16897091.1
(22) Date of filing: 16.12.2016
(51) Int. Cl.: B60L 1/00, B60L 50/60, B60L 53/10, B60L 58/10, B60L 53/60, B60L 53/30, H02J 9/06, H02J 7/00, B60W 20/13, B60W 20/12, B60W 10/30, B60W 10/08, B60W 10/06, B60L 3/00

(54) **SWITCHING CONTROL DEVICE AND SWITCHING CONTROL METHOD**
SCHALTSTEUERUNGSVORRICHTUNG UND SCHALTSTEUERUNGSVERFAHREN
DISPOSITIF DE COMMANDE DE COMMUTATION ET PROCÉDÉ DE COMMANDE DE COMMUTATION

(30) Priority: 31.03.2016 JP 2016072292
(43) Date of publication of application: 06.02.2019
(73) Proprietor: Kabushiki Kaisha Toshiba, Minato-ku Tokyo 105-0023 (JP); Toshiba Infrastructure Systems & Solutions Corporation, Kawasaki-shi, Kanagawa 212-0013 (JP)
(72) Inventor: KOYAMA, Keiko, Tokyo 105-8001 (JP); ABE, Tatsuro, Tokyo 105-8001 (JP)
(74) Representative: AWA Sweden AB
(86) International application number: PCT/JP2016/087669
(87) International publication number: WO 2017/168875

(56) References cited:
- EP-A1- 2 724 878
- JP-A- 2013 225 968
- JP-A- 2015 138 501
- US-A1- 2002 113 576
- US-A1- 2012 290 161
- US-A1- 2013 332 016
- US-B2- 8 324 858

## Description

### FIELD

Embodiments of described herein relate generally to a switching control device and a switching control method.

### BACKGROUND

A traveling distance of an electric vehicle not including an internal combustion engine is limited by an electricity storage amount of an electricity storage functional unit such as a storage battery, and the traveling distance thereof is shorter than that of an automobile including an internal combustion engine. Due to this, for a hybrid car including a plurality of power sources such as an electricity storage functional unit and an internal combustion engine, a method of increasing traveling distance by switching between a power source for air conditioning and a power source for traveling has been examined.

For example, for hybrid cars, there is a method of causing an electricity storage functional unit to function as a power source for air conditioning and traveling until a distance to a destination becomes equal to or smaller than a predetermined distance, and causing an internal combustion engine to function as the power source for air conditioning and traveling when the distance to the destination becomes equal to or smaller than the predetermined distance. For hybrid cars, there is a method in which, assuming that an electricity storage amount of the electricity storage functional unit when the hybrid car arrives at the destination is a target amount, when the electricity storage amount of the electricity storage functional unit becomes equal to or smaller than the target amount before the hybrid car arrives at the destination, the internal combustion engine is made to be the power source for air conditioning and traveling.US 2012/290161 A1 relates to an air conditioning control device for electric vehicle. US 8324858 B2 relates to a charging stations for electric vehicles.

However, with a conventional method of switching a power source, an internal combustion engine is switched to a power source for air conditioning and traveling when a distance to a destination becomes equal to or smaller than a predetermined distance or when an electricity storage amount of an electricity storage functional unit becomes equal to or smaller than a target amount, so that it is difficult to make a long-distance traveling plan using the electricity storage functional unit as a power source.

### BRIEF DESCRIPTION OF DRAWINGS

FIG. 1 is a diagram illustrating an example of a configuration of a power source switching control system according to a first embodiment.
FIG. 2 is a flowchart illustrating an example of a procedure of switching of a power source of an onboard air conditioner in the power source switching control system according to the first embodiment.
FIG. 3 is a diagram illustrating an example of a configuration of a power source switching control system according to a second embodiment.
FIG. 4 is a diagram illustrating an example of a configuration of a power source switching control system according to a third embodiment.
FIG. 5 is a diagram illustrating an example of a configuration of a power source switching control system according to a fourth embodiment.
FIG. 6 is a diagram illustrating an example of a configuration of a power source switching control system according to a fifth embodiment.
FIG. 7 is a diagram illustrating an example of a configuration of a power source switching control system according to a sixth embodiment.

### DETAILED DESCRIPTION

The invention is defined by the appended independent claims. Dependent claims constitute embodiments of the invention.

In general, a switching control device according to an embodiment includes a controller, a prediction unit, and a calculator. The controller controls a switching unit that is able to switch a power source of an air conditioning appliance of an electric bus operating according to a predetermined schedule to a first electricity storage functional unit or a predetermined power source. The first electricity storage functional unit is a power source of a motor that causes the electric bus to travel. The predetermined power source is different from the first electricity storage functional unit. The prediction unit predicts a charging time during which the first electricity storage functional unit is able to be charged by a charger at a first position at which the first electricity storage functional unit is able to be charged. The calculator calculates, based on the schedule, a first electricity storage amount of the first electricity storage functional unit required for driving the motor to a second position excepting a charging amount charged to the first electricity storage functional unit at the first position corresponding to the charging time based on the schedule. When the electricity storage amount of the first electricity storage functional unit is equal to or smaller than the first electricity storage amount, the controller controls the switching unit to switch the power source of the air conditioning appliance to a predetermined power source from the first electricity storage functional unit.

The following describes, with reference to the attached drawings, an air conditioning power source switching system to which a switching control device and a switching control method according to embodiments is applied.

### First Embodiment

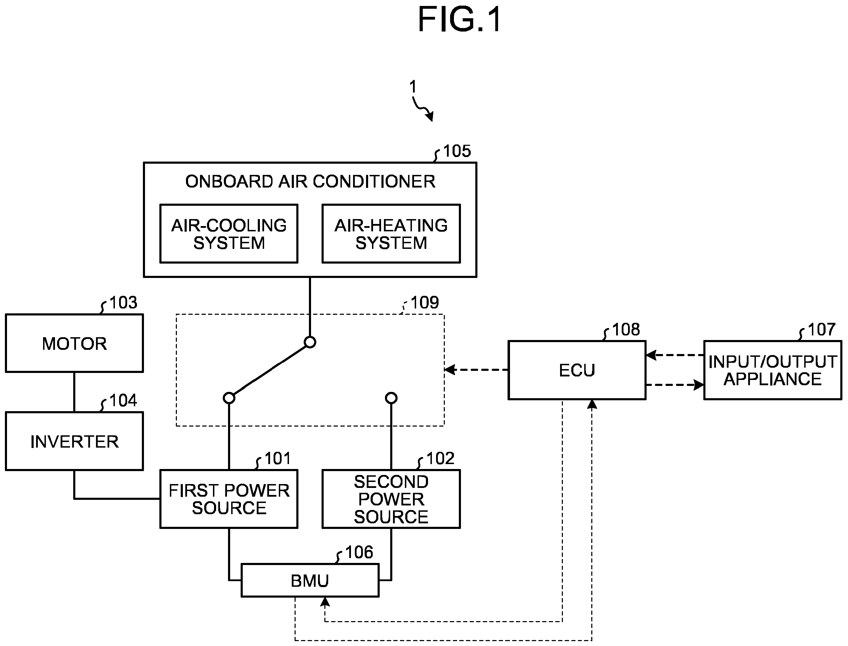

FIG. 1 is a diagram illustrating an exemplary system not covered by the claims in which a switching control device according to the first embodiment can be applied. As illustrated in FIG. 1, a power source switching control device according to the present embodiment is applied to an electric vehicle (EV) bus B (an example of an electric bus) operating according to a predetermined schedule using an electricity storage functional unit such as a storage battery as a power source. Specifically, as illustrated in FIG. 1, the electric vehicle (EV) bus B 1 includes a first power source 101, a second power source 102, a motor 103, an inverter 104, an onboard air conditioner 105 (hereinafter, referred to as an onboard air conditioner), a battery management unit (BMU) 106, an input/output appliance 107, an engine control unit (ECU) 108, and a switch 109.

The first power source 101 (an example of a first electricity storage functional unit) is an electricity storage functional unit such as a storage battery serving as a power source of at least the motor 103 and the onboard air conditioner 105 among loads included in the EV bus B. In the present embodiment, the first power source 101 is a power source of auxiliary machinery included in the EV bus B in addition to the motor 103 and the onboard air conditioner 105. The second power source 102 (an example of a predetermined power source) can function as a power source of the onboard air conditioner 105. In the present embodiment, the second power source 102 is not used as a power source of the loads other than the onboard air conditioner 105. In the present embodiment, an electricity storage functional unit such as a storage battery is used as the second power source 102, but it is sufficient that the second power source 102 can be used as the power source of the onboard air conditioner 105. For example, the second power source 102 may be a hydrogen fuel engine, a diesel engine, a gasoline engine, a power generator, and the like.

The motor 103 is an electric motor that causes the EV bus B equipped with the power source switching control system 1 to travel. The inverter 104 changes a current flowing from the first power source 101 to the motor 103 and a voltage applied to the motor 103 from the first power source 101 corresponding to a rating of the motor 103. The onboard air conditioner 105 is an example of an air conditioning appliance that adjusts temperature and the like in the EV bus B. In the present embodiment, the onboard air conditioner 105 includes an air-cooling system that lowers the temperature in the EV bus B, and an air-heating system that raises the temperature in the EV bus B. The BMU 106 controls charging and discharging of the first power source 101 and the second power source 102, and detects the temperature and a residual capacity (state of charge: SOC) of the first power source 101 and the second power source 102, for example.

Through the input/output appliance 107, it is possible to input various pieces of information such as destination information indicating a destination of the EV bus B, present location information indicating a position (a present location) of the EV bus B, a position at which a charger is provided that can charge the first power source 101 (a charger installation place), type information (for example, a quick charger) related to the charger provided at the charger installation place, a schedule indicating scheduled arrival time and the like at which the EV bus B is scheduled to arrive at a destination, and route information indicating a route of the EV bus B to the destination.

The switch 109 is a switching unit that is able to switch the power source of the onboard air conditioner 105 to the first power source 101 or the second power source 102. The ECU 108 (an example of a controller) performs electric control in the EV bus B such as switching of a power source of each load unit included in the EV bus B or control of the BMU 106. In the present embodiment, the ECU 108 includes a central processing unit (CPU), a read only memory (ROM), a random access memory (RAM), and the like. The CPU then executes various programs such as power source switching control software stored in the ROM using the RAM as a working area to perform electric control in the EV bus B. In this case, the power source switching control software is a program for switching the power source of the onboard air conditioner 105 to the first power source 101 or the second power source 102.

Next, with reference to FIG. 1, the following describes switching for the power source of the onboard air conditioner 105 in the power source switching control system 1 according to the present embodiment.

When the EV bus B equipped with the power source switching control device starts to travel, the ECU 108 controls the BMU 106 to supply electric power to the motor 103 from the first power source 101. The ECU 108 also controls the switch 109 to switch the power source of the onboard air conditioner 105 to the first power source 101, and causes the onboard air conditioner 105 to operate. Next, based on the destination information, the present location information, the charger installation place, the type information, the schedule, the route information, and the like input from the input/output appliance 107, the ECU 108 calculates an electricity storage amount of the first power source 101 required for driving the motor 103 in travel of the EV bus B to the destination (hereinafter, referred to as a required electricity storage amount).

When the EV bus B stops at the charger installation place before arriving at the destination, the first power source 101 of the EV bus B is able to be charged before arriving at the destination, so that a possible traveling distance can be prolonged by electric power supplied from the charged first power source 101. However, when the EV bus B stops at the destination before arriving at the charger installation place, the EV bus B needs to secure at least an electricity storage amount required for traveling to the destination for the first power source 101. When the scheduled arrival time at the destination is set in the schedule, a time during which the EV bus B can stop at the charger installation place is predetermined, so that the first power source 101 cannot be charged with electricity the storage amount of which is required for traveling to the destination in some cases at the charger installation place. Additionally, depending on specs of the first power source 101 included in the EV bus B or a battery capacity, the first power source 101 cannot be charged with electricity the storage amount of which is required for traveling to the destination in some cases.

Thus, the ECU 108 needs to calculate required amount of electric power in consideration of variable factors such as the scheduled arrival time at the destination of the EV bus B, the specs of the first power source 101, and the battery capacity of the first power source 101. Specifically, the ECU 108 (an example of a prediction unit) predicts a charging time during which the first power source 101 is able to be charged by the charger installed at the charger installation place, at the charger installation place at which the first power source 101 is able to be charged (an example of a first position). Next, the ECU 108 (an example of a calculator) calculates, as the required electricity storage amount (an example of a first electricity storage amount), the electricity storage amount of the first power source 101 required for driving the motor 103 in travel of the EV bus B to the destination (an example of a second position) excepting the storage amount of electricity charged to the first power source 101 at the charger installation place according to the predicted charging time based on the schedule. In the present embodiment, the required electricity storage amount is calculated based on the traveling distance of the EV bus B per predetermined electricity storage amount and the distance to the destination.

Specifically, when the EV bus B arrives at the destination before arriving at the charger installation place, or a case in which the destination of the EV bus B is the charger setting place, the ECU 108 calculates, as the required electricity storage amount, the electricity storage amount of the first power source 101 required for driving the motor 103 in travel of the EV bus B to the destination. More specifically, the ECU 108 calculates, as the required electricity storage amount, a value obtained by multiplying the predetermined electricity storage amount by a value obtained by dividing the distance from the present location to the destination by the traveling distance per predetermined electricity storage amount.

By contrast, when the EV bus B arrives at the charger installation place before arriving at the destination, the ECU 108 calculates, as the required electricity storage amount, an electricity storage amount obtained by subtracting the storage amount of electricity charged to the first power source 101 at the charger installation place corresponding to the predicted charging time from the electricity storage amount of the first power source 101 required for driving the motor 103 in travel of the EV bus B to the destination. More specifically, the ECU 108 calculates a remaining distance by subtracting the possible traveling distance of the EV bus B with the storage amount of electricity charged to the first power source 101 at the charger installation place from the distance from the present location to the destination. The ECU 108 then calculates, as the required electricity storage amount, a value obtained by multiplying the predetermined electricity storage amount by a value obtained by dividing the calculated remaining distance by the traveling distance per predetermined electricity storage amount. However, when the calculated required electricity storage amount is smaller than the electricity storage amount of the first power source 101 required for driving the motor 103 to the charger installation place at which the EV bus B stops before arriving at the destination, the ECU 108 corrects the calculated required electricity storage amount at least to the electricity storage amount of the first power source 101 required for driving the motor 103 to the charger installation place.

When the electricity storage amount of the first power source 101 becomes equal to or smaller than the required electricity storage amount, the ECU 108 controls the switch 109 to switch the power source of the onboard air conditioner 105 to the second power source 102. Consequently, the EV bus B can be caused to travel to the destination using the electricity storage functional unit constituting the first power source 101 as a power source for the motor 103, so that a long-distance traveling plan using the electricity storage functional unit as a power source can be made. Accordingly, in the present embodiment, the ECU 108 functions as an example of a switching control device that controls switching of the power source of the onboard air conditioner 105.

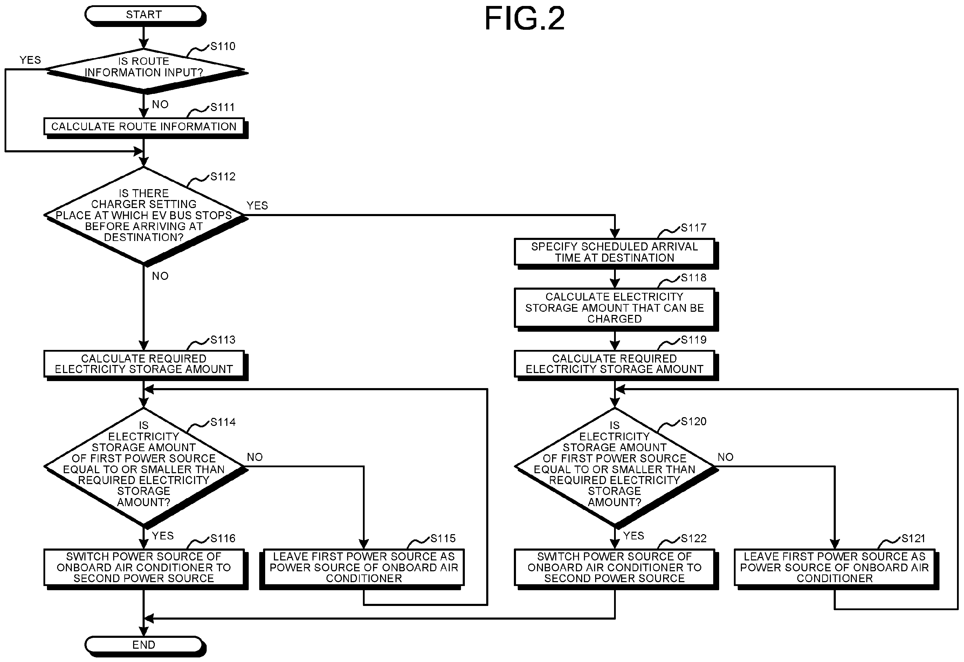

Next, with reference to FIG. 2, the following describes an example of a procedure of switching of the power source of the onboard air conditioner 105 in the power source switching device according to the present embodiment. FIG. 2 is a flowchart illustrating an example of a procedure of switching of the power source of the onboard air conditioner in the power source switching control system according to the first embodiment.

When the EV bus B starts to travel, the ECU 108 determines whether the route information is input from the input/output appliance 107 (Step S110). If the route information is not input from the input/output appliance 107 (No at Step S110), the ECU 108 calculates the route information using the destination information, the present location information, the charger installation place, the type information, the schedule, and the like (Step S111). If the route information is input from the input/output appliance 107 (Yes at Step S110) or the route information is calculated, the ECU 108 specifies charger installation places on the route of the EV bus B indicated by the route information. The ECU 108 then determines whether there is a charger installation place at which the EV bus B stops before arriving at the destination indicated by the destination information in the specified charger installation places (Step S112). If there is no charger setting place at which the EV bus B stops before arriving at the destination (No at Step S112), the ECU 108 calculates, as the required electricity storage amount, the electricity storage amount of the first power source 101 required for driving the motor 103 in travel of the EV bus B to the destination (Step S113).

Thereafter, until the EV bus B arrives at the destination, the ECU 108 determines whether the electricity storage amount of the first power source 101 is equal to or smaller than the calculated required electricity storage amount every predetermined period (Step S114). If the electricity storage amount of the first power source 101 is not equal to or smaller than the calculated required electricity storage amount (No at Step S114), the ECU 108 leaves the first power source 101 as the power source of the onboard air conditioner 105 (Step S115). By contrast, if the electricity storage amount of the first power source 101 is equal to or smaller than the calculated required electricity storage amount (Yes at Step S114), the ECU 108 controls the switch 109 to switch the power source of the onboard air conditioner 105 to the second power source 102 (Step S116).

At Step S112, if there is a charger setting place at which the EV bus B stops before arriving at the destination (Yes at Step S112), the ECU 108 specifies scheduled arrival time (an example of arrival time) of the EV bus B at the destination according to the schedule and the like input from the input/output appliance 107 (Step S117). Next, based on the scheduled arrival time of the EV bus B at the destination, the ECU 108 predicts the charging time during which the first power source 101 is able to be charged at the charger installation place at which the EV bus B stops before arriving at the destination. At the charger installation place at which the EV bus B stops before arriving at the destination, the ECU 108 calculates the storage amount of electricity that is able to be charged to the first power source 101 in the predicted charging time (hereinafter, referred to as a charging electricity storage amount) (Step S118).

The ECU 108 also calculates the electricity storage amount of the first power source 101 required for driving the motor 103 in travel of the EV bus B from the present location to the destination (hereinafter, referred to as a total electricity storage amount). The ECU 108 then calculates, as the required electricity storage amount, the electricity storage amount obtained by subtracting the charging electricity storage amount from the total electricity storage amount (Step S119). Thereafter, until the EV bus B arrives at the destination, the ECU 108 determines whether the electricity storage amount of the first power source 101 is equal to or smaller than the calculated required electricity storage amount every predetermined period (Step S120). If the electricity storage amount of the first power source 101 is not equal to or smaller than the calculated required electricity storage amount (No at Step S120), the ECU 108 leaves the first power source 101 as the power source of the onboard air conditioner 105 (Step S121). By contrast, if the electricity storage amount of the first power source 101 is equal to or smaller than the calculated required electricity storage amount (Yes at Step S120), the ECU 108 controls the switch 109 to switch the power source of the onboard air conditioner 105 to the second power source 102 (Step S122).

In this way, with the power source switching control device according to the first embodiment, a long-distance traveling plan for the EV bus B using the electricity storage functional unit as a power source can be made.

### Second Embodiment

The present embodiment is an example of predicting the charging time at the charger installation place based on at least one of a congestion state of a road to the destination and a shape of the road to the destination, and calculating the required electricity storage amount based on at least one of the congestion state of the road to the destination and the shape of the road to the destination. In the following description, the same component as that in the first embodiment is omitted.

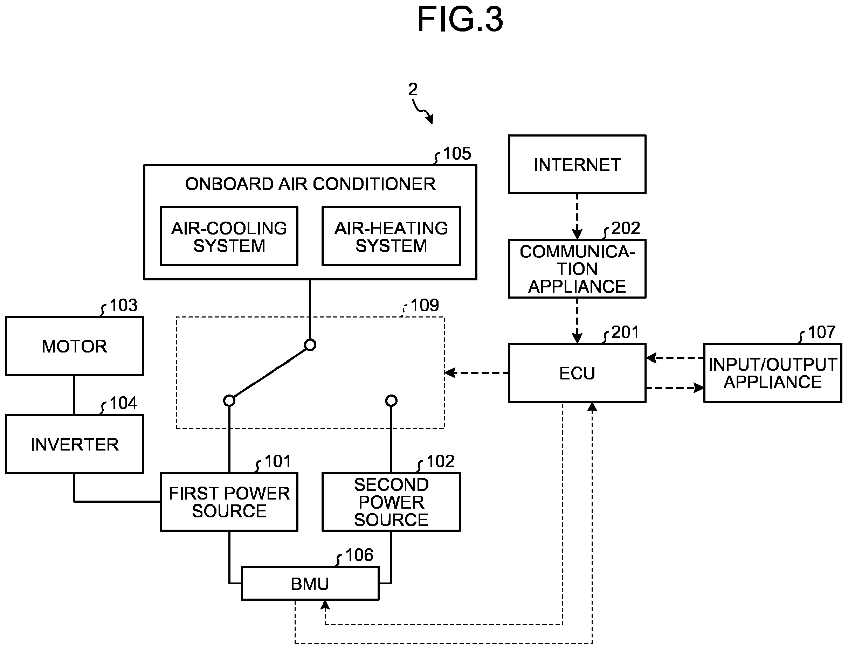

FIG. 3 is a diagram illustrating an exemplary system not covered by the claims in which a switching control device according to the second embodiment can be applied. As illustrated in FIG. 3, a power source switching device according to the present embodiment is applied to an electric vehicle (EV) bus B which includes the first power source 101, the second power source 102, the motor 103, the inverter 104, the onboard air conditioner 105, the BMU 106, the input/output appliance 107, the switch 109, an ECU 201, and a communication appliance 202. The communication appliance 202 acquires at least one of road congestion information and road environment information from an external device via a network such as the Internet. In this case, the road congestion information is information indicating a congestion state of a road to the destination, for example, a traveling route to the destination and the required time to the destination. The road environment information is information indicating the shape of the road to the destination, for example, a gradient of the road to the destination. In the present embodiment, attaching great importance to real-time performance of the acquired road congestion information and road environment information, the power source switching control device acquires the road congestion information and the road environment information from the external device via the network using the communication appliance 202 included in the power source switching control device, but the embodiment is not limited thereto. For example, the power source switching control device may acquire the road congestion information and the road environment information from the external device via the network using a communication appliance included in on-vehicle equipment of the EV bus B or an external communication appliance.

In the present embodiment, the ECU 201 predicts a charging time at the charger installation place based on at least one of the road congestion information and the road environment information acquired by the communication appliance 202. Consequently, prediction accuracy for the charging time at the charger installation place can be improved, so that the electricity storage amount of the first power source 101 can be prevented from running out in travel of the EV bus B to the destination. For example, when the road congestion information indicates that the traveling route to the destination is jammed up, or a case in which the road environment information indicates that there are many curves in the traveling route to the destination or a gradient of an upward slope to the destination is equal to or larger than a predetermined angle, the arriving time at the charger installation place is estimated to be delayed, so that the ECU 201 predicts the charging time to be shorter corresponding to a predetermined rate. By contrast, when the road congestion information indicates that the traveling route to the destination is not jammed up, or a case in which the road environment information indicates that there are many straight lines in the traveling route to the destination or a gradient to the destination is smaller than the predetermined angle, the arriving time at the destination is estimated to be earlier, so that the ECU 201 predicts the charging time to be longer corresponding to a predetermined rate.

The ECU 201 also calculates the required electricity storage amount based on at least one of the road congestion information and the road environment information acquired by the communication appliance 202. Consequently, calculation accuracy for the required electricity storage amount can be improved, so that the electricity storage amount of the first power source 101 can be prevented from running out in travel of the EV bus B to the destination. For example, when the road congestion information indicates that the traveling route to the destination is jammed up, or a case in which the road environment information indicates that there are many curves in the traveling route to the destination or a gradient of an upward slope to the destination is equal to or larger than a predetermined angle, the required time to the destination is prolonged with high possibility, so that the ECU 201 calculates the required electricity storage amount to be larger corresponding to a predetermined rate. By contrast, when the road congestion information indicates that the traveling route to the destination is not jammed up, or a case in which the road environment information indicates that there are many straight lines in the traveling route to the destination or a gradient to the destination is smaller than the predetermined angle, the required time to the destination is shortened with high possibility, so that the ECU 201 calculates the required electricity storage amount to be smaller corresponding to a predetermined rate.

As described above, if the required electricity storage amount is calculated simply with the route on which the EV bus B travels to the destination, an error may be caused in the amount depending on the congestion state of the route indicated by the route information. For example, power consumption in the EV bus B increases when the road is congested and the traveling time to the destination is prolonged, and a larger electricity storage amount than the required electricity storage amount may be consumed by the motor 103. If the required electricity storage amount is calculated simply with the route on which the EV bus B travels to the destination, an error may be caused in the amount depending on the shape of the route. For example, higher torque is required for the EV bus B and power consumption increases as a gradient of an upward slope on the route increases, and a larger electricity storage amount than the required electricity storage amount may be consumed by the motor 103. However, according to the present embodiment, as described above, the charging time and the required electricity storage amount are calculated based on at least one of the road congestion information and the road environment information acquired by the communication appliance 202, so that calculation accuracy for the required electricity storage amount can be improved.

In this way, the power source switching control device according to the second embodiment can prevent the electricity storage amount of the first power source 101 from running out in travel of the EV bus B to the destination.

### Third Embodiment

The present embodiment is an example of predicting the charging time and calculating the required electricity storage amount by an onboard PC of the EV bus. In the following description, the same component as that in the first and the second embodiments is omitted.

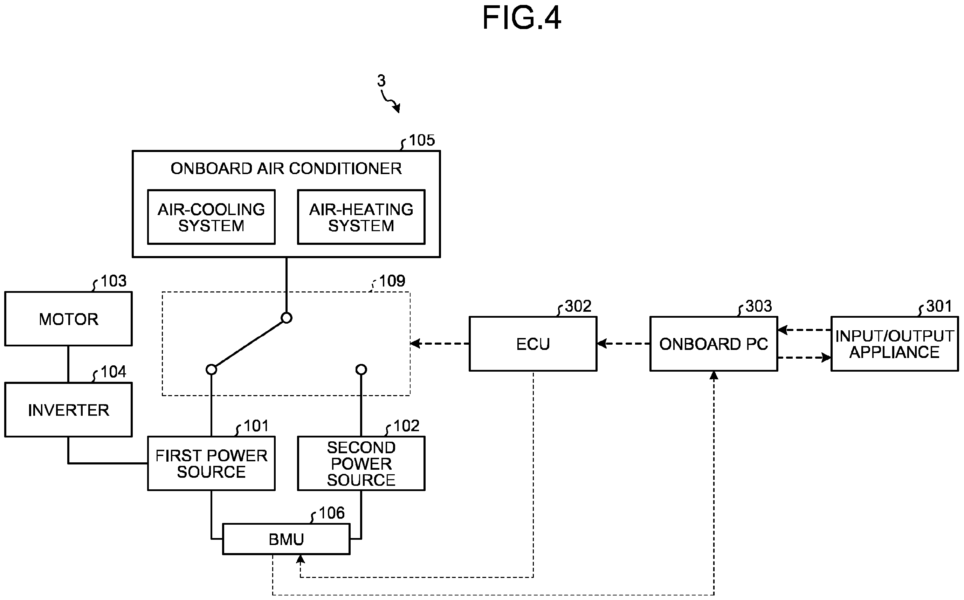

FIG. 4 is a diagram illustrating an exemplary system not covered by the claims in which a switching control device according to the third embodiment can be applied. As illustrated in FIG. 4, a power source switching control device according to the present embodiment is applied to an electric vehicle (EV) bus B which includes the first power source 101, the second power source 102, the motor 103, the inverter 104, the onboard air conditioner 105, the BMU 106, an input/output appliance 301, the switch 109, an ECU 302, and an onboard PC 303. In the present embodiment, the input/output appliance 301 inputs various pieces of information such as the destination information, the present location information, the charger installation place, the type information, the schedule, the route information, and the like to the onboard PC 303 described later. The onboard PC 303 is mounted on the EV bus B, and functions as a prediction unit that predicts the charging time and a calculator that calculates the required electricity storage amount. The onboard PC 303 then notifies the ECU 302 of the calculated required electricity storage amount.

When the electricity storage amount of the first power source 101 is equal to or smaller than the required electricity storage amount notified from the onboard PC 303, the ECU 302 controls the switch 109 to switch the power source of the onboard air conditioner 105 to the second power source 102. Consequently, even if software functioning as the prediction unit that predicts the charging time and the calculator that calculates the required electricity storage amount is not installed in the ECU 302 in advance, the switch 109 can be controlled by using the required electricity storage amount calculated by the onboard PC 303, so that a function of controlling the switch 109 using the required electricity storage amount can be added later. However, the switch 109 for switching the power source of the onboard air conditioner 105 to the first power source 101 or the second power source 102 needs to be added to the EV bus B in advance. Accordingly, in the present embodiment, the ECU 302 and the onboard PC 303 function as an example of the switching control device that controls switching of the power source of the onboard air conditioner 105.

In this way, with the power source switching control device according to the third embodiment, the function of controlling the switch 109 using the required electricity storage amount can be added later.

### Fourth Embodiment

The present embodiment is an example of predicting the charging time at the charger installation place based on at least one of the congestion state of the road to the destination and the shape of the road to the destination, and calculating the required electricity storage amount based on at least one of the congestion state of the road to the destination and the shape of the road to the destination by the onboard PC 303. In the following description, the same component as that in the second and the third embodiments is omitted.

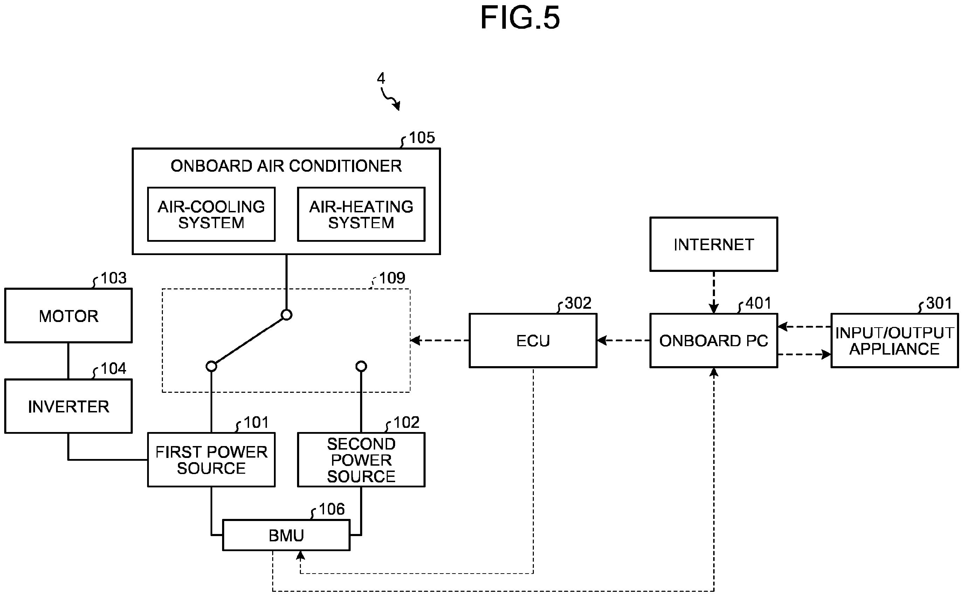

FIG. 5 is a diagram illustrating an exemplary system not covered by the claims in which a switching control device according to the fourth embodiment can be applied. As illustrated in FIG. 5, a power source switching control device according to the present embodiment is applied to an electric vehicle (EV) bus B which includes the first power source 101, the second power source 102, the motor 103, the inverter 104, the onboard air conditioner 105, the BMU 106, the input/output appliance 301, the switch 109, the ECU 302, and an onboard PC 401. In the present embodiment, the onboard PC 401 acquires at least one of the road congestion information and the road environment information from an external device via a network such as the Internet. The onboard PC 401 then predicts the charging time at the charger installation place based on at least one of the acquired road congestion information and road environment information. The onboard PC 401 also calculates the required electricity storage amount based on at least one of the acquired road congestion information and road environment information.

In this way, with the power source switching control device according to the fourth embodiment, the same working effect as that of the second embodiment can be obtained even when the prediction unit that predicts the charging time and the calculator that calculates the required electricity storage amount are implemented by the onboard PC 401.

### Fifth Embodiment

The present embodiment is an example of predicting the charging time and calculating the required electricity storage amount by a communication appliance. In the following description, the same component as that in the first and the second embodiment is omitted.

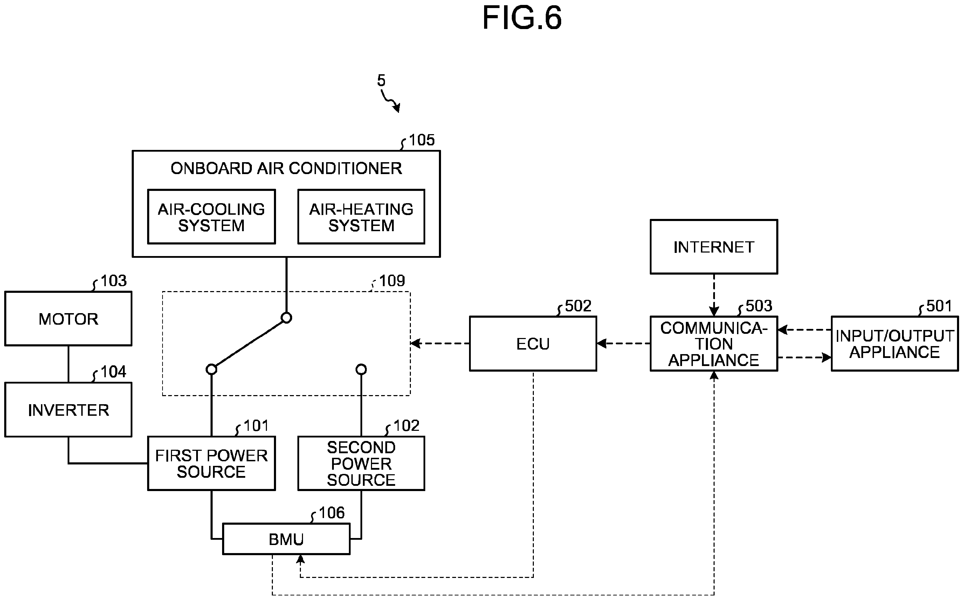

FIG. 6 is a diagram illustrating an exemplary system not covered by the claims in which a switching control device according to the fifth embodiment can be applied. As illustrated in FIG. 6, a power source switching control device according to the present embodiment is applied to an electric vehicle (EV) bus B which includes the first power source 101, the second power source 102, the motor 103, the inverter 104, the onboard air conditioner 105, the BMU 106, an input/output appliance 501, the switch 109, an ECU 502, and a communication appliance 503. In the present embodiment, the input/output appliance 501 inputs various pieces of information such as the destination information, the present location information, the charger installation place, the type information, the schedule, and the route information to the communication appliance 503 described later. The communication appliance 503 functions as a prediction unit that predicts the charging time and a calculator that calculates the required electricity storage amount. The communication appliance 503 then notifies the ECU 502 of the calculated required electricity storage amount.

When the electricity storage amount of the first power source 101 is equal to or smaller than the required electricity storage amount notified from the communication appliance 503, the ECU 502 controls the switch 109 to switch the power source of the onboard air conditioner 105 to the second power source 102. Consequently, even if software functioning as the prediction unit that predicts the charging time and the calculator that calculates the required electricity storage amount is not installed in the ECU 502 in advance, the switch 109 can be controlled by using the required electricity storage amount calculated by the communication appliance 503, so that a function of controlling the switch 109 using the required electricity storage amount can be added later. However, the switch 109 for switching the power source of the onboard air conditioner 105 to the first power source 101 or the second power source 102 needs to be added to the EV bus B in advance. Accordingly, in the present embodiment, the ECU 502 and the communication appliance 503 function as an example of the switching control device that controls switching of the power source of the onboard air conditioner 105.

In this way, with the power source switching control device according to the fifth embodiment, the function of controlling the switch 109 using the required electricity storage amount can be added later.

### Sixth Embodiment

The present embodiment is an example of predicting the charging time and calculating the required electricity storage amount on an external server. In the following description, the same component as that in the first and the second embodiments is omitted.

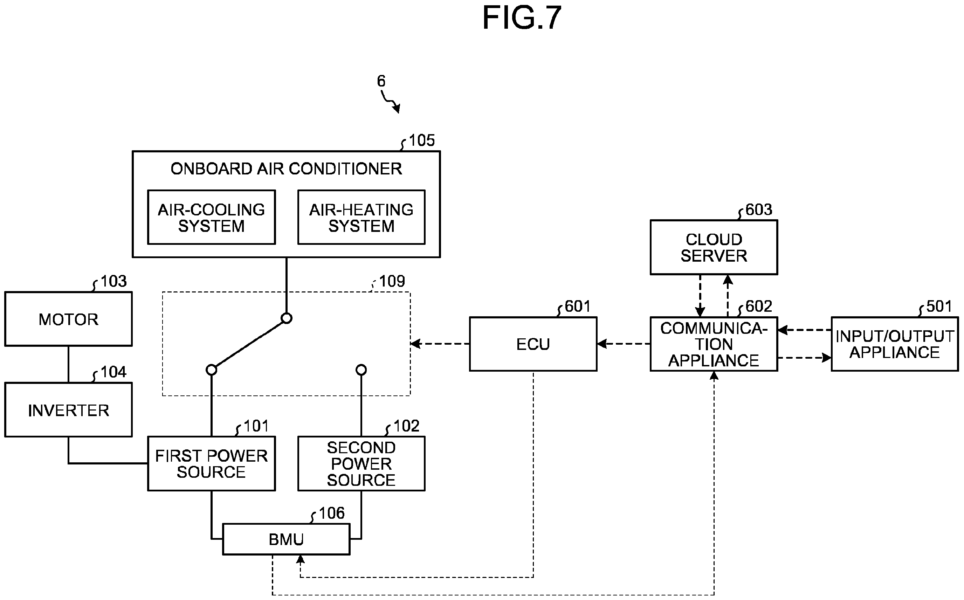

FIG. 7 is a diagram illustrating an exemplary system not covered by the claims in which a switching control device according to the sixth embodiment can be applied. As illustrated in FIG. 7, a power source switching control device according to the present embodiment is applied to an electric vehicle (EV) bus B which includes the first power source 101, the second power source 102, the motor 103, the inverter 104, the onboard air conditioner 105, the BMU 106, the input/output appliance 501, the switch 109, an ECU 601, and a communication appliance 602. In the present embodiment, the communication appliance 602 transmits, to a cloud server 603, various pieces of information such as the destination information, the present location information, the charger installation place, the type information, the schedule, and the route information input from the input/output appliance 501. The cloud server 603 (an example of an external server) functions as a prediction unit that predicts the charging time and a calculator that calculates the required electricity storage amount using the various pieces of information input from the communication appliance 602. The cloud server 603 notifies the ECU 601 of the calculated required electricity storage amount via the communication appliance 602. The cloud server 603 may correct the calculated required electricity storage amount based on a calculation history of the required electricity storage amount. Consequently, calculation accuracy for the required electricity storage amount can be improved. In a case of calculating the required electricity storage amount by the cloud server 603, one appliance can calculate the required electricity storage amount of the first poser source 101 of a plurality of EV buses B at the same time.

The ECU 601 receives the required electricity storage amount from the cloud server 603 via the communication appliance 602. When the electricity storage amount of the first power source 101 is equal to or smaller than the required electricity storage amount received from the cloud server 603, the ECU 601 controls the switch 109 to switch the power source of the onboard air conditioner 105 to the second power source 102. Consequently, even if software functioning as the prediction unit that predicts the charging time and the calculator that calculates the required electricity storage amount is not installed in the ECU 601 in advance, the switch 109 can be controlled by using the required electricity storage amount calculated by the cloud server 603, so that a function of controlling the switch 109 using the required electricity storage amount can be added later. However, the switch 109 for switching the power source of the onboard air conditioner 105 to the first power source 101 or the second power source 102 needs to be added to the EV bus B in advance.

In this way, with the power source switching control device according to the sixth embodiment, a function of controlling the switch 109 using the required electricity storage amount can be added later.

As described above, according to the first to the sixth embodiments, a long-distance traveling plan for the EV bus B using the electricity storage functional unit as a power source can be made.

## Claims

1. A switching control device comprising:
a controller (108, 201, 302, 502, 601) configured to control a switching unit (109) that is able to switch a power source of an air conditioning appliance (105) of an electric bus operating according to a predetermined schedule to a first electricity storage functional unit (101) or a predetermined power source (102), the first electricity storage functional unit (101) being a power source of a motor (103) configured to cause the electric bus to travel, and the predetermined power source (102) being different from the first electricity storage functional unit (101);
a prediction unit (108, 201, 302, 502, 601) configured to predict a charging time during which the first electricity storage functional unit (101) is able to be charged by a charger at a first position at which the first electricity storage functional unit (101) is able to be charged; and
a calculator (108, 201, 302, 502, 601) configured to calculate, based on the predetermined schedule, a first electricity storage amount of the first electricity storage functional unit (101) required for driving the motor (103) to a second position excepting a charging amount charged to the first electricity storage functional unit (101) at the first position corresponding to the charging time based on the predetermined schedule, wherein,
when an electricity storage amount of the first electricity storage functional unit (101) is equal to or smaller than the first electricity storage amount, the controller (108, 201, 302, 502, 601) is configured to control the switching unit (109) to switch the power source of the air conditioning appliance (105) to the predetermined power source (102) from the first electricity storage functional unit (101).

2. The switching control device according to claim 1, wherein the calculator (108, 201, 302, 502, 601) is configured to calculate, as the first electricity storage amount, an electricity storage amount larger than the electricity storage amount required for driving the motor (103) to one of the first position and the second position, at which the electric bus stops earlier.

3. The switching control device according to claim 1, wherein the prediction unit (108, 201, 302, 502, 601) is configured to predict the charging time based on arrival time of the electric bus at the first position according to the predetermined schedule.

4. The switching control device according to claim 1, wherein the calculator (108, 201, 302, 502, 601) is configured to calculate the first electricity storage amount based on a traveling distance of the electric bus per predetermined electricity storage amount and a distance to the first position.

5. The switching control device according to claim 1, wherein
the prediction unit (108, 201, 302, 502, 601) is configured to predict the charging time based on at least one of a congestion state of a road to the second position and a shape of the road to the second position, and
the calculator (108, 201, 302, 502, 601) is configured to calculate the first electricity storage amount based on at least one of the congestion state of the road to the second position and the shape of the road to the second position.

6. The switching control device according to claim 1, wherein the predetermined power source (102) is a second electricity storage functional unit (102) different from the first electricity storage functional unit (101), or a power generator.

7. The switching control device according to claim 1, wherein the prediction unit (108, 201, 302, 502, 601) and the calculator (108, 201, 302, 502, 601) are arranged in an onboard PC (303, 401) arranged in the electric bus.

8. The switching control device according to claim 1, wherein the controller (108, 201, 302, 502, 601) is configured to receive the first electricity storage amount from an external server (603) in which the prediction unit (108, 201, 302, 502, 601) and the calculator (108, 201, 302, 502, 601) are arranged, and when the electricity storage amount of the first electricity storage functional unit (101) is equal to or smaller than the received first electricity storage amount, the controller (108, 201, 302, 502, 601) is configured to control the switching unit (109) to switch the power source of the air conditioning appliance (105) to the predetermined power source (102) from the first electricity storage functional unit (101).

9. A switching control method comprising:
predicting a charging time during which a first electricity storage functional unit (101) is able to be charged by a charger at a first position at which the first electricity storage functional unit (101) is able to be charged, the first electricity storage functional unit (101) being an electricity storage functional unit serving as a power source of a motor that causes an electric bus to operate according to a predetermined schedule to travel;
calculating, based on the predetermined schedule, a first electricity storage amount of the first electricity storage functional unit (101) required for driving the motor (103) to a second position excepting a charging amount charged to the first electricity storage functional unit (101) at the first position corresponding to the charging time; and
when an electricity storage amount of the first electricity storage functional unit (101) is equal to or smaller than the first electricity storage amount, controlling a switching unit (109) to switch, from the first electricity storage functional unit (101), a power source of an air conditioning appliance (105) of the electric bus to a predetermined power source (102) different from the first electricity storage functional unit (101).

## Patentansprüche

1. Schaltsteuerungsvorrichtung, die umfasst:
eine Steuereinrichtung (108, 201, 302, 502, 601), die dazu ausgestaltet ist, eine Schalteinheit (109) zu steuern, die in der Lage ist, eine Leistungsquelle eines Klimageräts (105) eines Elektrobusses, der gemäß einem vorbestimmten Plan betrieben wird, zu einer ersten Elektrizitätsspeicherungsfunktionseinheit (101) oder einer vorbestimmten Leistungsquelle (102) zu schalten, wobei die erste Elektrizitätsspeicherungsfunktionseinheit (101) eine Leistungsquelle eines Motors (103) ist, der dazu ausgestaltet ist, zu bewirken, dass der Elektrobus fährt, und die vorbestimmte Leistungsquelle (102) sich von der ersten Elektrizitätsspeicherungsfunktionseinheit (101) unterscheidet;
eine Vorhersageeinheit (108, 201, 302, 502, 601), die dazu ausgestaltet ist, eine Ladezeit vorherzusagen, während der die erste Elektrizitätsspeicherungsfunktionseinheit (101) in der Lage ist, durch ein Ladegerät an einer ersten Position geladen zu werden, an der die erste Elektrizitätsspeicherungsfunktionseinheit (101) in der Lage ist, geladen zu werden; und
einen Rechner (108, 201, 302, 502, 601), der dazu ausgestaltet ist, basierend auf dem vorbestimmten Plan eine erste Elektrizitätsspeicherungsmenge der ersten Elektrizitätsspeicherungsfunktionseinheit (101), die zum Antreiben des Motors (103) zu einer zweiten Position erforderlich ist, mit Ausnahme einer in die erste Elektrizitätsspeicherungsfunktionseinheit (101) an der ersten Position geladene Lademenge, die der Ladezeit entspricht, basierend auf dem vorbestimmten Plan zu berechnen,
wobei die Steuereinrichtung (108, 201, 302, 502, 601) dazu ausgestaltet ist, wenn eine Elektrizitätsspeicherungsmenge der ersten Elektrizitätsspeicherungsfunktionseinheit (101) gleich oder kleiner als die erste Elektrizitätsspeicherungsmenge ist, die Schalteinheit (109) zu steuern, um die Leistungsquelle des Klimageräts (105) von der ersten Elektrizitätsspeicherungsfunktionseinheit (101) zu der vorbestimmten Leistungsquelle (102) zu schalten.

2. Schaltsteuerungsvorrichtung nach Anspruch 1, wobei der Rechner (108, 201, 302, 502, 601) dazu ausgestaltet ist, als die erste Elektrizitätsspeicherungsmenge eine Elektrizitätsspeicherungsmenge zu berechnen, die höher als die Elektrizitätsspeicherungsmenge ist, die zum Antreiben des Motors (103) zu einer von der ersten Position und der zweiten Position erforderlich ist, an der Elektrobus früher anhält.

3. Schaltsteuerungsvorrichtung nach Anspruch 1, wobei die Vorhersageeinheit (108, 201, 302, 502, 601) dazu ausgestaltet ist, die Ladezeit basierend auf der Ankunftszeit des Elektrobusses an der ersten Position gemäß dem vorbestimmten Plan vorherzusagen.

4. Schaltsteuerungsvorrichtung nach Anspruch 1, wobei der Rechner (108, 201, 302, 502, 601) dazu ausgestaltet ist, die erste Elektrizitätsspeicherungsmenge basierend auf einer Fahrdistanz des Elektrobusses pro vorbestimmte Elektrizitätsspeicherungsmenge und einer Distanz zu der ersten Position zu berechnen.

5. Schaltsteuerungsvorrichtung nach Anspruch 1, wobei
die Vorhersageeinheit (108, 201, 302, 502, 601) dazu ausgestaltet ist, die Ladezeit basierend auf mindestens einem von einem Stauzustand einer Straße an der zweiten Position und einer Form der Straße zu der zweiten Position vorherzusagen, und
der Rechner (108, 201, 302, 502, 601) dazu ausgestaltet ist, die erste Elektrizitätsspeicherungsmenge basierend auf mindestens einem von dem Stauzustand der Straße zu der zweiten Position und der Form der Straße zu der zweiten Position zu berechnen.

6. Schaltsteuerungsvorrichtung nach Anspruch 1, wobei die vorbestimmte Leistungsquelle (102) eine zweite Elektrizitätsspeicherungsfunktionseinheit (102), die sich von der ersten Elektrizitätsspeicherungsfunktionseinheit (101) unterscheidet, oder ein Leistungsgenerator ist.

7. Schaltsteuerungsvorrichtung nach Anspruch 1, wobei die Vorhersageeinheit (108, 201, 302, 502, 601) und der Rechner (108, 201, 302, 502, 601) in einem Bord-PC (303, 401) angeordnet sind, der in dem Elektrobus angeordnet ist.

8. Schaltsteuerungsvorrichtung nach Anspruch 1, wobei die Steuereinrichtung (108, 201, 302, 502, 601) dazu ausgestaltet ist, die erste Elektrizitätsspeicherungsmenge von einem externen Server (603) zu empfangen, in dem die Vorhersageeinheit (108, 201, 302, 502, 601) und der Rechner (108, 201, 302, 502, 601) angeordnet sind, und die Steuereinrichtung (108, 201, 302, 502, 601) dazu ausgestaltet ist, wenn die Elektrizitätsspeicherungsmenge der ersten Elektrizitätsspeicherungsfunktionseinheit (101) gleich oder kleiner ist als die erste empfangene Elektrizitätsspeicherungsmenge, die Schalteinheit (109) zu steuern, um die Leistungsquelle des Klimageräts (105) von der ersten Elektrizitätsspeicherungsfunktionseinheit (101) zu der vorbestimmten Leistungsquelle (102) zu schalten.

9. Schaltsteuerungsverfahren, das umfasst:
Vorhersagen einer Ladezeit, während der eine erste Elektrizitätsspeicherungsfunktionseinheit (101) in der Lage ist, durch einen Lader an einer ersten Position geladen zu werden, an der die erste Elektrizitätsspeicherungsfunktionseinheit (101) in der Lage ist, geladen zu werden, wobei die erste Elektrizitätsspeicherungsfunktionseinheit (101) eine Elektrizitätsspeicherungsfunktionseinheit ist, die als eine Leistungsquelle eines Motors dient, die bewirkt, dass ein Elektrobus gemäß einem vorbestimmten Plan betrieben wird, um zu fahren;
Berechnen, basierend auf dem vorbestimmten Plan, einer ersten Elektrizitätsspeicherungsmenge der ersten Elektrizitätsspeicherungsfunktionseinheit (101), die zum Antreiben des Motors (103) zu einer zweiten Position erforderlich ist, mit Ausnahme einer Lademenge, die in die erste Elektrizitätsspeicherungsfunktionseinheit (101) an der ersten Position geladen wird und die der Ladezeit entspricht; und
wenn eine Elektrizitätsspeicherungsmenge der ersten Elektrizitätsspeicherungsfunktionseinheit (101) gleich oder kleiner als die erste Elektrizitätsspeicherungsmenge ist, Steuern einer Schalteinheit (109), um eine Leistungsquelle eines Klimageräts (105) des Elektrobusses von der ersten Elektrizitätsspeicherungsfunktionseinheit (101) zu einer vorbestimmten Leistungsquelle (102) zu schalten, die sich von der ersten Elektrizitätsspeicherungsfunktionseinheit (101) unterscheidet.

## Revendications

1. Dispositif de commande de commutation comprenant :
une unité de commande (108, 201, 302, 502, 601) configurée pour commander une unité de commutation (109) qui est apte à commuter une source d'énergie d'un appareil de climatisation (105) d'un bus électrique fonctionnant selon un planning prédéterminé à une première unité fonctionnelle de stockage d'électricité (101) ou à une source d'énergie prédéterminée (102), la première unité fonctionnelle de stockage d'électricité (101) étant une source d'énergie d'un moteur (103) configuré pour amener le bus électrique à se déplacer, et la source d'énergie prédéterminée (102) étant différente de la première unité fonctionnelle de stockage d'électricité (101) ;
une unité de prédiction (108, 201, 302, 502, 601) configurée pour prédire un temps de charge au cours duquel la première unité fonctionnelle de stockage d'électricité (101) est apte à être chargée par un chargeur à une première position à laquelle la première unité fonctionnelle de stockage d'électricité (101) est apte à être chargée ; et
un calculateur (108, 201, 302, 502, 601) configurée pour calculer, sur la base du planning prédéterminé, une première quantité de stockage d'électricité de la première unité fonctionnelle de stockage d'électricité (101) nécessaire pour entraîner le moteur (103) jusqu'à une seconde position à l'exception d'une quantité de charge chargée dans la première unité fonctionnelle de stockage d'électricité (101) à la première position correspondant au temps de charge sur la base du planning prédéterminé, dans lequel
lorsqu'une quantité de stockage d'électricité de la première unité fonctionnelle de stockage d'électricité (101) est inférieure ou égale à la première quantité de stockage d'électricité, l'unité de commande (108, 201, 302, 502, 601) est configurée pour commander à l'unité de commutation (109) de commuter la source d'énergie de l'appareil de climatisation (105) à la source d'énergie prédéterminée (102) depuis la première unité fonctionnelle de stockage d'électricité (101).

2. Dispositif de commande de commutation selon la revendication 1, dans lequel le calculateur (108, 201, 302, 502, 601) est configuré pour calculer, en tant que la première quantité de stockage d'électricité, une quantité de stockage d'électricité supérieure à la quantité de stockage d'électricité nécessaire pour entraîner le moteur (103) à l'une parmi la première position et la seconde position, à laquelle le bus électrique s'arrête plus tôt.

3. Dispositif de commande de commutation selon la revendication 1, dans lequel l'unité de prédiction (108, 201, 302, 502, 601) est configurée pour prédire le temps de charge sur la base d'un temps d'arrivée du bus électrique à la première position en fonction du planning prédéterminé.

4. Dispositif de commande de commutation selon la revendication 1, dans lequel le calculateur (108, 201, 302, 502, 601) est configuré pour calculer la première quantité de stockage d'électricité sur la base d'une distance de déplacement du bus électrique par quantité de stockage d'électricité prédéterminée et d'une distance jusqu'à la première position.

5. Dispositif de commande de commutation selon la revendication 1, dans lequel
l'unité de prédiction (108, 201, 302, 502, 601) est configurée pour prédire le temps de charge sur la base d'au moins l'un parmi un état d'encombrement d'une route jusqu'à la seconde position et d'une forme de la route jusqu'à la seconde position, et
le calculateur (108, 201, 302, 502, 601) est configuré pour calculer la première quantité de stockage d'électricité sur la base d'au moins l'un parmi l'état d'encombrement de la route jusqu'à la seconde position et la forme de la route jusqu'à la seconde position.

6. Dispositif de commande de commutation selon la revendication 1, dans lequel la source d'énergie prédéterminée (102) est une seconde unité fonctionnelle de stockage d'électricité (102) différente de la première unité fonctionnelle de stockage d'électricité (101), ou un générateur d'énergie.

7. Dispositif de commande de commutation selon la revendication 1, dans lequel l'unité de prédiction (108, 201, 302, 502, 601) et le calculateur (108, 201, 302, 502, 601) sont agencés dans un PC embarqué (303, 401) agencé dans le bus électrique.

8. Dispositif de commande de commutation selon la revendication 1, dans lequel l'unité de commande (108, 201, 302, 502, 601) est configurée pour recevoir la première quantité de stockage d'électricité depuis un serveur externe (603) dans lequel l'unité de prédiction (108, 201, 302, 502, 601) et le calculateur (108, 201, 302, 502, 601) sont agencés, et, lorsque la quantité de stockage d'électricité de la première unité fonctionnelle de stockage d'électricité (101) est inférieure ou égale à la première quantité de stockage d'électricité, l'unité de commande (108, 201, 302, 502, 601) est configurée pour commander à l'unité de commutation (109) de commuter la source d'énergie de l'appareil de climatisation (105) à la source d'énergie prédéterminée (102) depuis la première unité fonctionnelle de stockage d'électricité (101).

9. Procédé de commande de commutation comprenant :
la prédiction d'un temps de charge au cours duquel une première unité fonctionnelle de stockage d'électricité (101) est apte à être chargée par un chargeur à une première position à laquelle la première unité fonctionnelle de stockage d'électricité (101) est apte à être chargée, la première unité fonctionnelle de stockage d'électricité (101) étant une unité fonctionnelle de stockage d'électricité servant de source d'énergie d'un moteur qui amène un bus électrique à fonctionner selon un planning prédéterminé pour se déplacer,
le calcul, sur la base du planning prédéterminé, d'une première quantité de stockage d'électricité de la première unité fonctionnelle de stockage d'électricité (101) nécessaire pour entraîner le moteur (103) jusqu'à une seconde position à l'exception d'une quantité de charge chargée dans la première unité fonctionnelle de stockage d'électricité (101) à la première position correspondant au temps de charge ; et
lorsqu'une quantité de stockage d'électricité de la première unité fonctionnelle de stockage d'électricité (101) est inférieure ou égale à la première quantité de stockage d'électricité, la commande à une unité de commutation (109) de commuter, depuis la première unité fonctionnelle de stockage d'électricité (101), une source d'énergie d'un appareil de climatisation (105) du bus électrique à une source d'énergie prédéterminée (102) différente de la première unité fonctionnelle de stockage d'électricité (101).
